# EUROPEAN PATENT APPLICATION

(11) **EP 4 785 778 A1**
(43) Date of publication of application: **05.08.2026**
(21) Application number: 25155427.5
(22) Date of filing: 31.01.2025
(51) Int. Cl.: A01G 25/09, A01M 7/00, B05B 13/00, B60L 50/60, E01H 10/00, G05D 1/00

(54) **ROBOTIC SPRINKLER**

(71) Applicant: ZhongShan QingYi Metal Products Enterprise Co., Ltd., ZhongShan City, Guangdong (CN)
(72) Inventor: Li, Shulong, ZhongShan City, Guangdong Province (CN); Wu, Kunguang, ZhongShan City, Guangdong Province (CN); Feng, Yu, ZhongShan City, Guangdong Province (CN); Yu, Tang Chieh, Taichung City (TW)
(74) Representative: Cabinet Chaillot

(57) **Abstract**

A robotic sprinkler comprises an autonomous device (100) and a working base (200) configured for the autonomous device (100) to dock. The autonomous device (100) is driven by a control unit (7) to perform a sprinkling mode and a recharge mode. In the sprinkling mode, the autonomous device (100) has a scanning module (4) to detect and plan a driving path for the autonomous device (100) to move along the driving path and perform a sprinkling operation. In the recharge mode, the autonomous device (100) receives a guide signal to move and dock on the working base (200) for replenishing water and/or recharging. The robotic sprinkler achieves automatic and precise irrigation of vegetation, saving water resources.

## Description

### FIELD OF THE INVENTION

The present invention relates to a sprinkler, and more particularly, to a robotic sprinkler.

### BACKGROUND OF THE INVENTION

Detached villas often have large courtyards where residents plant lawns, flowers, shrubs and trees to beautify the landscape. However, due to the large size of the courtyard, daily irrigation and maintenance of the vegetation are time-consuming and labor-intensive. In general, most vegetation is irrigated using sprinkler products such as oscillating sprinklers disposed in the courtyard, which reduces the time required for irrigation and maintenance. However, the above irrigation manner still has the following problems:
Problem 1: There are dead corners for irrigation. It is still necessary to manually water the vegetation in the dead corners with a hand-held water gun, making it impossible to meet the irrigation needs of the entire courtyard.
Problem 2: For households with children, there are some children's play facilities and various toys in the courtyard, making it difficult to irrigate vegetation precisely without avoiding these facilities and toys, thereby increasing the maintenance difficulty for residents.
Problem 3: Remote control is not possible. As residents frequently travel for business, they cannot activate the sprinkler, resulting in withering of vegetation due to a lack of care and increasing the maintenance cost of the garden.
Problem 4: It is unable to adjust the amount of water to be sprayed according to the conditions of vegetation. Because vegetation exposed to sunlight for a long period of time needs more water than vegetation in the shade, the conventional irrigation manner does not have the function to identify the conditions of the vegetation and cannot adjust the amount of water to be sprayed according to the conditions of the vegetation.
Problem 5: The installation of underground water pipe networks in the courtyard is not only cumbersome but also results in disorganized piping, which affects the aesthetics and usability of the courtyard.

### SUMMARY OF THE INVENTION

The primary object of the present invention is to provide a robotic sprinkler, which can intelligently detect the distance of surrounding objects, record and plan a driving path for irrigation, and adjust the amount of water to be sprayed according to the conditions of plants, can be controlled remotely, and has automatic irrigation capabilities.

In order to achieve the foregoing object, the present invention provides a robotic sprinkler comprising an autonomous device and a working base configured for the autonomous device to dock. The autonomous device is driven by a drive wheel unit to move. The autonomous device includes: a water tank, a nozzle unit, a scanning module, a signal receiving unit, a battery module and a control unit. The water tank is disposed in the autonomous device for storing and supplying water. The nozzle unit communicates with the water tank. The scanning module is disposed on a front portion of the autonomous device for detecting a distance of a surrounding object from the autonomous device. The signal receiving unit is configured for receiving an external signal. The battery module is disposed in the autonomous device for supplying power required for operation of the autonomous device. The control unit is electrically connected to the nozzle unit, the drive wheel unit, the scanning module, the signal receiving unit and the battery module, enabling the control unit to drive the autonomous device to perform a sprinkling mode and a recharge mode. The working base has a signal transmitting unit, a charging module, a water replenishment module and a control circuit board. The signal transmitting unit is configured for transmitting a guide signal. The charging module is electrically connected to an external power source for supplying charging power. The water replenishment module is configured for connecting an external water source. The control circuit board is electrically connected to the signal transmitting unit, the charging module and the water replenishment module to control the water replenishment module for water injection and the signal transmission unit for transmitting the guide signal. In the sprinkling mode, the control unit plans a driving path according to distance information of the surrounding object detected by the scanning module and controls the autonomous device to move along the driving path and activate the nozzle unit to perform a sprinkling operation. In the recharge mode, the control unit receives the guide signal transmitted by the signal transmitting unit through the signal receiving unit, so that the control unit controls the autonomous device to move and dock on the working base according to the guide signal, and the charging module is coupled to the battery module, and the water replenishment module is coupled to the water tank for the working base to charge the battery module through the charging module and/or replenish water in the water tank through the water replenishment module. The robotic sprinkler achieves automatic and precise irrigation of vegetation, saving water resources and reducing maintenance costs.

### BRIEF DESCRIPTION OF THE DRAWINGS

FIG. 1 is a perspective view of the present invention;
FIG. 2 is a perspective view of an autonomous device of the present invention;
FIG. 3 is a perspective view of a working base of the present invention;
FIG. 4 is a schematic view of the autonomous device in a recharge mode of the present invention; and
FIG. 5 is a block diagram of the structure of the present invention.

### DETAILED DESCRIPTION OF THE PREFERRED EMBODIMENTS

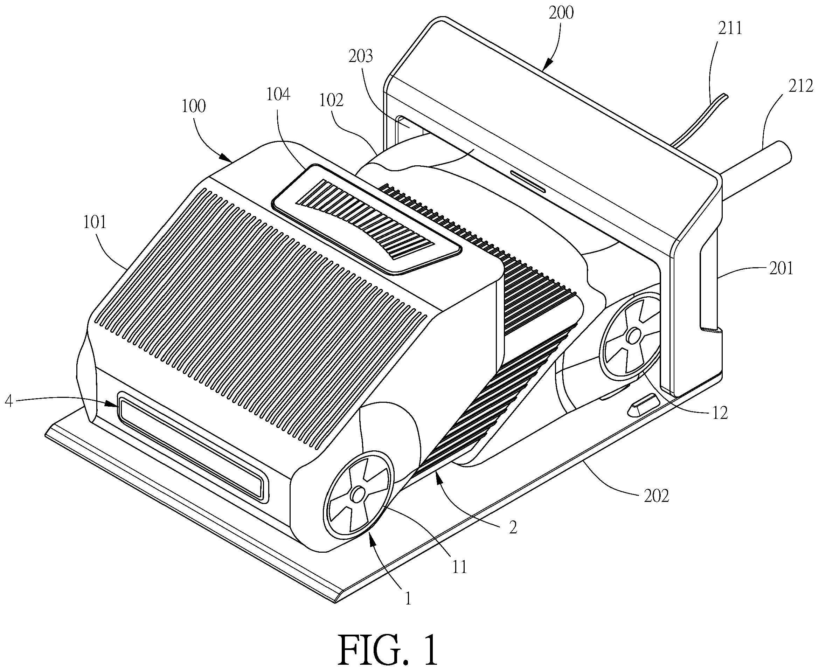

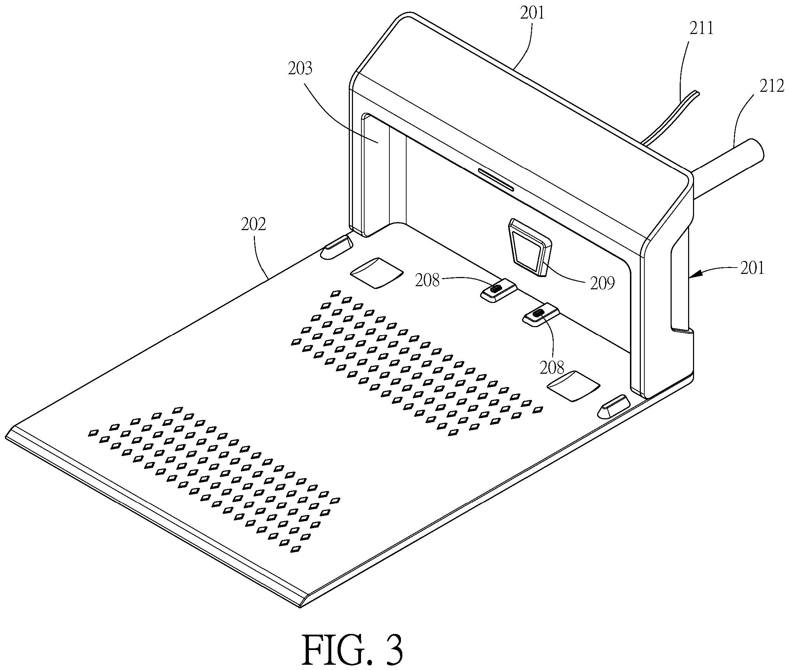

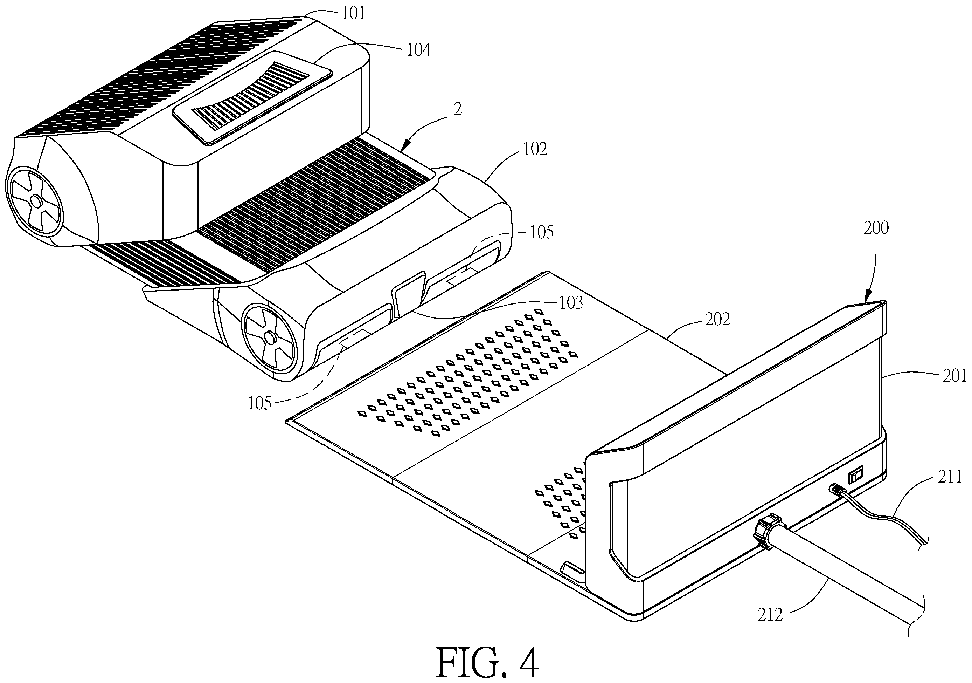

As shown in FIG. 1 through FIG. 5, a robotic sprinkler according to a preferred embodiment of the present invention comprises an autonomous device 100 and a working base 200 for the autonomous device 100 to dock.

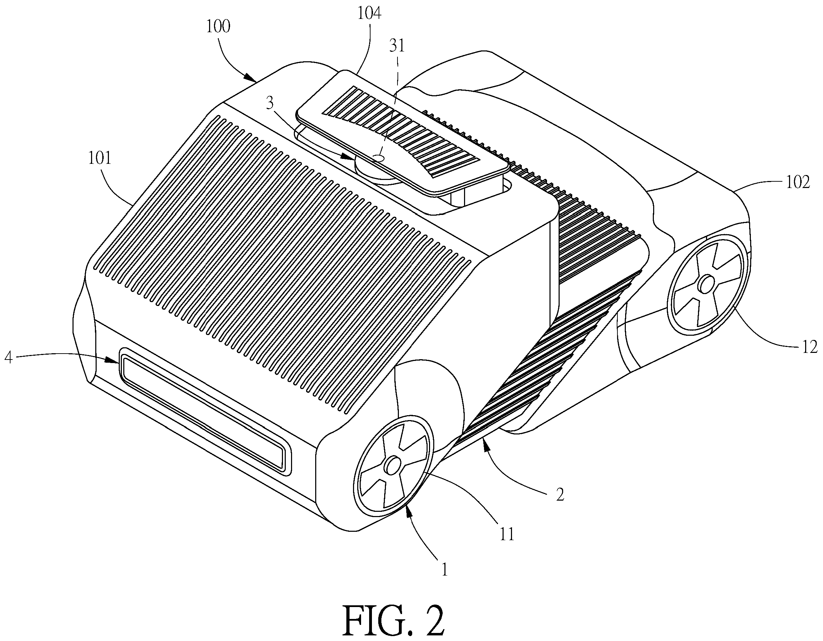

As shown in FIG. 1 and FIG. 2, the autonomous device 100 is driven by a drive wheel unit 1 to move. The drive wheel unit 1 includes a front wheel unit 11 disposed at a front portion 101 of the autonomous device 100 and a rear wheel unit 12 disposed at a rear portion 102 of the autonomous device 100. The autonomous device 100 includes a water tank 2 therein. The rear portion 102 of the autonomous device 100 has an interface portion 103 communicating with the water tank 2, allowing water to be injected into the water tank 2. A liftable top cover 104 is provided on the top of the front portion 101 of the autonomous device 100. A nozzle unit 3 is provided in the top cover 104 and communicates with the water tank 2. The nozzle unit 3 includes a plurality of nozzles 31 capable of spraying water in different patterns, meeting the needs of watering different plants.

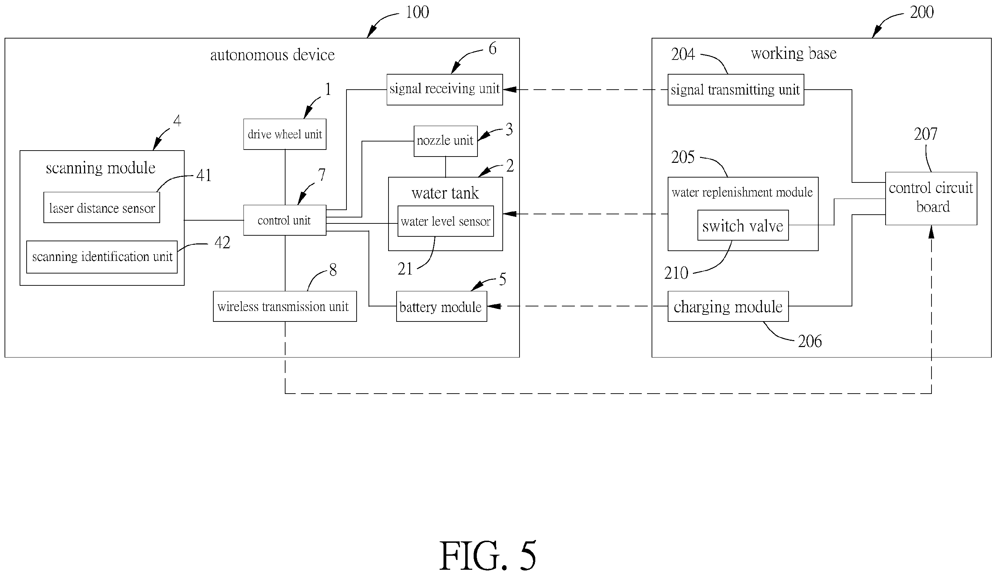

Referring to FIG. 5, the autonomous device 100 has a scanning module 4, a battery module 5, a signal receiving unit 6, and a control unit 7. The control unit 7 is disposed inside the autonomous device 100 and is electrically connected to the nozzle unit 3, the drive wheel unit 1, the scanning module 4, the battery module 5 and the signal receiving unit 6, so that the control unit 7 drives the autonomous device 100 to perform a sprinkling mode and a recharge mode. The control unit 7 may include control-related components such as processors, power circuits, and the like, which are well known or commonly used by those skilled in the art, but not limited thereto.

The scanning module 4 has a laser distance sensor (LDS) 41 and a scanning identification unit 42 for detecting the distance of the surrounding object from the autonomous device 100 and analyzing the conditions of plants. In some preferred embodiments, the scanning module 4 is located at the front of the autonomous device 100, that is to say, at the front end of the front portion 101, so that the laser distance sensor 41 can detect the environment in front of the autonomous device more accurately and measure the distance precisely. The scanning identification unit 42 is configured to identify objects and plants around the autonomous device by means of camera photography or X-ray inspection, but not limited thereto. The control unit 7 plans a driving path that avoids the objects in the courtyard according to the above information and ensures that the driving path reaches every corner of the courtyard.

The scanning identification unit 42 further acquires the conditions of the branches, leaves, and other parts of the plants surrounding the autonomous device, analyzes and outputs plant condition data, enabling the control unit 7 to adjust the amount of water sprayed by the nozzle unit 3 according to the plant condition data. If the leaves of the plant are wrinkled and the branches are drooping, the scanning identification unit 42 outputs the plant condition data corresponding to the water shortage condition of the plant, so that the control unit 7 controls the nozzle unit to increase the water output according to the plant condition data. If the plant is in a normal state with spreading leaves and upright branches, the scanning identification unit 42 will output different plant condition data corresponding to the normal state of the plant, so that the control unit 7 controls the nozzle unit 3 to maintain the water output or appropriately reduce the water output, so as to achieve reasonable distribution of the water output according to the conditions of the plants, thereby reducing water waste.

The autonomous device 100 may further include a proximity sensor (not shown) on its side. The autonomous device 100 may further include sensing devices therein, such as an ultrasonic sensor (not shown), a magnetometer (not shown), an accelerometer (not shown), a gyroscope (not shown), an odometer, and the like, which are configured for providing the control unit with various position information and motion information of the autonomous device.

The battery module 5 is disposed inside the autonomous device 100 and is configured to supply power required for the operation of the autonomous device. The battery module 5 may be a rechargeable battery such as a lithium battery. In the sprinkling mode, the control unit 7 plans a driving path based on the distance information of the surrounding object detected by the scanning module 4, controls the autonomous device 100 to move away from the fixed objects in the courtyard, starts the nozzle unit 3 to spray water, and adjusts the water output of the nozzle unit 3 in real time according to the plant condition data of the scanning identification unit 42, so as to achieve efficient sprinkling and to save water resources effectively.

As shown in FIG. 1, FIG. 3 and FIG. 4, the working base 200 has a stand 201 and a base 202 located at the bottom of the stand 201 and extending toward the front side of the stand 201. The stand 201 has a receiving space 203 with an opening facing forward for the rear portion of the autonomous device 100 to dock and rest. The working base 200 further has a signal transmitting unit 204, a water replenishment module 205, a charging module 206, and a control circuit board 207. The control circuit board 207 is electrically connected to the signal transmitting unit 204, the water replenishment module 205 and the charging module 206.

The charging module 206 is connected to an external electric wire 211 and includes a pair of charging contacts 208 disposed on the base 202. The rear portion 102 of the autonomous device 100 has a pair of electrode contacts 105. When the autonomous device 100 is docked on the working base 200, the electrode contacts 105 are electrically connected to the charging contacts 208, so that the charging module 206 supplies power to the battery module 5 via the charging contacts 208 and the electrode contacts 105.

The water replenishment module 205 is connected to an external water supply pipe 212 and has a water outlet 209 located in the receiving space 203 for connecting the interface portion 103 communicating with the water tank 2, allowing water to be replenished into the water tank 2. A switch valve 210 is provided in the water outlet 209 for controlling water injection. The switch valve 210 is controlled by the control circuit board 207.

The signal transmitting unit 204 is preferably disposed at the front side of the stand 201. The signal receiving unit 6 is disposed at the rear side of the front portion 101 of the autonomous device 100 and is flush with the height of the signal transmitting unit 204. The signal transmitting unit 204 transmits a guide signal. The signal receiving unit 6 receives the guide signal, so that the control unit 7 confirms the position of the working base 200 according to the guide signal and quickly guides the autonomous device 100 to return and dock on the working base 200.

In some preferred embodiments, the signal receiving unit 6 is an infrared signal receiver. The signal transmitting unit 204 includes a pair of centering signal transmitters (not shown), a first signal transmitter (not shown), and a second signal transmitter (not shown). The centering signal transmitters, the first signal transmitter and the second signal transmitter are all infrared transmitters. A left guide signal emitted by the first signal transmitter is a long-distance infrared signal, which is projected onto the left front area in front of the working base 200. A right guide signal emitted by the second signal transmitter is a long-distance infrared signal, which is projected onto the right front area in front of the working base 200. Centering guide signals emitted by the pair of centering signal transmitters are short-distance infrared signals, which are projected onto the area directly in front of the working base 200.

When the autonomous device 100 appears in the left front area or the right front area, the relative position of the autonomous device 100 and the working base 200 can be determined according to the received left guide signal or the right guide signal. Then, the autonomous device 100 is guided to move toward the front area to search for the centering guide signals. Under the guidance of the centering guide signals, the autonomous device 100 is docked on the working base 200 with the rear portion 102 accurately aligned with the receiving space 203, so that the interface portion 103 is coupled to the water outlet 209, and the electrode contacts 105 are coupled to the charging contacts 208.

As shown in FIG. 5, the control unit 7 further has a low power determination mechanism and a low water level determination mechanism. The low power determination mechanism is that when the power of the battery module 5 is lower than a power setting value, the control unit 7 activates the recharge mode. As to the low water level determination mechanism, a water level sensor 21 is provided in the water tank 2. The water level sensor 21 detects the water level in the water tank and outputs a water level value. When the control unit 7 determines that the water level value is lower than a water level setting value, the control unit 7 activates the recharge mode.

In the recharge mode, referring to FIG. 2 through FIG. 5, the control unit 7 searches for the guide signal transmitted by the signal transmitting unit through the signal receiving unit 6, so that the control unit 7 controls the autonomous device 100 to move and dock on the working base 200 according to the guide signal, and the charging contacts 208 of the charging module 206 are coupled to the electrode contacts 105 of the battery module 5 to charge the battery module. The water outlet 209 of the water replenishment module 205 is coupled to the interface portion 103 communicating with the water tank 2. The control unit 7 is further electrically connected to a wireless transmission unit 8. The wireless transmission unit 8 transmits the water level value to the control circuit board 207. The control circuit board 207 controls the duration of the water injection through the switch valve 210 according to the water level value. The wireless transmission unit 8 can be used to receive a control signal from an external mobile device, so that the control unit 7 can be remotely activated, which is convenient for users to remotely control the autonomous device to water the vegetation.

According to the above description, the robotic sprinkler provided by the present invention can achieve the following effects:
Firstly, no dead-corner irrigation and no manual operation are required. The present invention detects the distances of surrounding objects from the autonomous device through the scanning module, plans a reasonable driving path, ensures that no dead corner for irrigation, and achieves fully automatic irrigation. This eliminates the need for manual operation, such as holding a garden gun to irrigate vegetation located in hard-to-reach areas.
Secondly, precise irrigation of vegetation and reducing maintenance difficulty. The present invention uses the scanning identification unit to distinguish plants and objects, avoiding objects during irrigation to ensure precise irrigation of vegetation. This prevents objects from getting wet and reduces the difficulty of maintenance for residents.
Thirdly, it can be remotely controlled. The present invention can receive control signals sent remotely from the user's mobile devices to activate watering of the garden, so that the user can take care of the garden vegetation even when he/she is not at home.
Fourthly, saving water resources. The present invention uses the scanning identification unit to analyze the conditions of plants, so that the control unit adjusts the water output of the nozzle unit according to the conditions of plants, thus reducing the waste of water resources.
Fifthly, maintaining the aesthetics of the garden. The present invention eliminates the need to pre-install water pipe networks in the garden, maintaining the aesthetic appearance of the courtyard without the water pipe network interfering with planting or usage.

## Claims

1. A robotic sprinkler, comprising:
an autonomous device (100), driven by a drive wheel unit (1) to move, the autonomous device (100) including:
a water tank (2), disposed in the autonomous device (100) for storing and supplying water;
a nozzle unit (3), communicating with the water tank (2);
a scanning module (4), disposed on a front portion (101) of the autonomous device (100) for detecting a distance of a surrounding object from the autonomous device (100);
a signal receiving unit (6), configured for receiving an external signal;
a battery module (5), disposed in the autonomous device (100) for supplying power required for operation of the autonomous device (100);
a control unit (7), electrically connected to the nozzle unit (3), the drive wheel unit (1), the scanning module (4), the signal receiving unit (6) and the battery module (5), enabling the control unit (7) to drive the autonomous device (100) to perform a sprinkling mode and a recharge mode;
a working base (200), configured for the autonomous device (100) to dock, the working base (200) having:
a signal transmitting unit (204), configured for transmitting a guide signal;
a charging module (206), electrically connected to an external power source for supplying charging power;
a water replenishment module (205), configured for connecting an external water source;
a control circuit board (207), electrically connected to the signal transmitting unit (204), the charging module (206) and the water replenishment module (205) to control the water replenishment module (205) for water injection and the signal transmission unit (204) for transmitting the guide signal;
wherein in the sprinkling mode, the control unit (7) plans a driving path according to distance information of the surrounding object detected by the scanning module (4) and controls the autonomous device (100) to move along the driving path and activate the nozzle unit (3) to perform a sprinkling operation;
wherein in the recharge mode, the control unit (7) receives the guide signal transmitted by the signal transmitting unit (204) through the signal receiving unit (6), so that the control unit (7) controls the autonomous device (100) to move and dock on the working base (200) according to the guide signal, and the charging module (206) is coupled to the battery module (5), and the water replenishment module (205) is coupled to the water tank (2) for the working base (200) to charge the battery module (5) through the charging module (206) and/or replenish water in the water tank (2) through the water replenishment module (205).

2. The robotic sprinkler as claimed in claim 1, wherein a liftable top cover (104) is provided on a top of the front portion (101) of the autonomous device (100), the nozzle unit (3) is disposed in the top cover (104) to move up and down along with the top cover (104), and the nozzle unit (3) includes a plurality of nozzles (31) capable of spraying water in different patterns.

3. The robotic sprinkler as claimed in claim 1, wherein the scanning module (4) has a laser distance sensor (41) for detecting the distance of the surrounding object from the autonomous device (100).

4. The robotic sprinkler as claimed in claim 3, wherein the scanning module (4) further has a scanning identification unit (42), and the scanning identification unit (42) analyzes conditions of plants around the autonomous device (100) and outputs plant condition data, enabling the control unit (7) to adjust an amount of water sprayed by the nozzle unit (3) according to the plant condition data.

5. The robotic sprinkler as claimed in claim 1, wherein the control unit (7) has a low power determination mechanism, when power of the battery module (5) is lower than a power setting value, the control unit (7) activates the recharge mode.

6. The robotic sprinkler as claimed in claim 1, wherein a water level sensor (21) is provided in the water tank (2), the water level sensor (21) detects a water level in the water tank (2) and outputs a water level value to the control unit (7), the control unit (7) has a low water level determination mechanism, when the water level value is lower than a water level setting value, the control unit (7) activates the recharge mode.

7. The robotic sprinkler as claimed in claim 1, wherein the battery module (5) has a pair of electrode contacts (105) disposed on a rear portion (102) of the autonomous device (100), and the electrode contacts (105) are coupled to a pair of charging contacts (208) of the charging module (206) for charging the battery module (5).

8. The robotic sprinkler as claimed in claim 1, wherein the water replenishment module (205) is connected to an external water supply pipe (212) and has a water outlet (209), a switch valve (210) is provided in the water outlet (209) for controlling water injection, a rear portion (102) of the autonomous device (100) has an interface portion (103) communicating with the water tank (2), and the interface portion (103) is coupled to the water outlet (209), allowing water to be injected into the water tank (2).

9. The robotic sprinkler as claimed in claim 1, wherein the control unit (7) is further electrically connected to a wireless transmission unit (8), and the wireless transmission unit (8) is able to receive a control signal from an external mobile device so that the control unit (7) can be remotely activated.

10. The robotic sprinkler as claimed in claim 1, wherein the signal receiving unit (6) is an infrared receiver, and the signal transmitting unit (204) is an infrared transmitter.

## Amended claims

### Amended claims in accordance with Rule 137(2) EPC.

1. A robotic sprinkler, comprising:
an autonomous device (100), driven by a drive wheel unit (1) to move, the autonomous device (100) including:
a water tank (2), disposed in the autonomous device (100) for storing and supplying water;
a nozzle unit (3), communicating with the water tank (2);
a scanning module (4), disposed on a front portion (101) of the autonomous device (100) for detecting a distance of a surrounding object from the autonomous device (100);
a signal receiving unit (6), configured for receiving an external signal;
a battery module (5), disposed in the autonomous device (100) for supplying power required for operation of the autonomous device (100);
a control unit (7), electrically connected to the nozzle unit (3), the drive wheel unit (1), the scanning module (4), the signal receiving unit (6) and the battery module (5), enabling the control unit (7) to drive the autonomous device (100) to perform a sprinkling mode and a recharge mode;
a working base (200), configured for the autonomous device (100) to dock, the working base (200) having:
a signal transmitting unit (204), configured for transmitting a guide signal;
a charging module (206), electrically connected to an external power source for supplying charging power;
a water replenishment module (205), configured for connecting an external water source;
a control circuit board (207), electrically connected to the signal transmitting unit (204), the charging module (206) and the water replenishment module (205) to control the water replenishment module (205) for water injection and the signal transmission unit (204) for transmitting the guide signal;
wherein in the sprinkling mode, the control unit (7) is configured to compute a driving path according to distance information of the surrounding object detected by the scanning module (4) and to control the autonomous device (100) to move along the driving path and activate the nozzle unit (3) to perform a sprinkling operation;
wherein in the recharge mode, the control unit (7) is configured to receive the guide signal transmitted by the signal transmitting unit (204) through the signal receiving unit (6), so that the control unit (7) controls the autonomous device (100) to move and dock on the working base (200) according to the guide signal, and the charging module (206) is coupled to the battery module (5), and the water replenishment module (205) is coupled to the water tank (2) for the working base (200) to charge the battery module (5) through the charging module (206) and/or replenish water in the water tank (2) through the water replenishment module (205);
wherein the robotic sprinkler is **characterised in that** a liftable top cover (104) is provided on a top of the front portion (101) of the autonomous device (100), the nozzle unit (3) is disposed in the top cover (104) to move up and down along with the top cover (104), and the nozzle unit (3) includes a plurality of nozzles (31) capable of spraying water in different patterns.

2. The robotic sprinkler as claimed in claim 1, wherein the scanning module (4) has a laser distance sensor (41) for detecting the distance of the surrounding object from the autonomous device (100).

3. The robotic sprinkler as claimed in claim 2, wherein the scanning module (4) further has a scanning identification unit (42) configured to analyze conditions of plants around the autonomous device (100) and outputs plant condition data, enabling the control unit (7) to adjust an amount of water sprayed by the nozzle unit (3) according to the plant condition data.

4. The robotic sprinkler as claimed in claim 1, wherein the control unit (7) has a low power determination mechanism according to which the control unit (7) is configured to active the recharge mode when power of the battery module (5) is lower than a power setting value.

5. The robotic sprinkler as claimed in claim 1, wherein a water level sensor (21) is provided in the water tank (2), the water level sensor (21) detects a water level in the water tank (2) and outputs a water level value to the control unit (7), the control unit (7) has a low water level determination mechanism, when the water level value is lower than a water level setting value, the control unit (7) activates the recharge mode.

6. The robotic sprinkler as claimed in claim 1, wherein the battery module (5) has a pair of electrode contacts (105) disposed on a rear portion (102) of the autonomous device (100), and the electrode contacts (105) are coupled to a pair of charging contacts (208) of the charging module (206) for charging the battery module (5).

7. The robotic sprinkler as claimed in claim 1, wherein the water replenishment module (205) is connected to an external water supply pipe (212) and has a water outlet (209), a switch valve (210) is provided in the water outlet (209) for controlling water injection, a rear portion (102) of the autonomous device (100) has an interface portion (103) communicating with the water tank (2), and the interface portion (103) is coupled to the water outlet (209), allowing water to be injected into the water tank (2).

8. The robotic sprinkler as claimed in claim 1, wherein the control unit (7) is further electrically connected to a wireless transmission unit (8), and the wireless transmission unit (8) is able to receive a control signal from an external mobile device so that the control unit (7) can be remotely activated.

9. The robotic sprinkler as claimed in claim 1, wherein the signal receiving unit (6) is an infrared receiver, and the signal transmitting unit (204) is an infrared transmitter.
